# EUROPEAN PATENT APPLICATION

(11) **EP 4 745 765 A1**
(43) Date of publication of application: **20.05.2026**
(21) Application number: 25214399.5
(22) Date of filing: 07.11.2025
(51) Int. Cl.: G06F 9/4401, G06F 9/451, G06F 9/455

(54) **ENABLING PERIPHERALS FROM MULTIPLE CLIENT DEVICES TO INTERACT WITH A VIRTUAL MACHINE**

(30) Priority: 18.11.2024 US 202418951586
(71) Applicant: Microsoft Technology Licensing, LLC, Redmond, WA 98052 (US)
(72) Inventor: SAUL, Elton, Redmond, 98052 (US); MARCHESE, Jordan Emil, Redmond, 98052 (US); GU, Liexian, Redmond, 98052 (US); PATNAIK, Sandeep, Redmond, 98052 (US)
(74) Representative: CMS Cameron McKenna Nabarro Olswang LLP

(57) **Abstract**

The technology described herein enables a remote desktop application to interact simultaneously with peripherals associated with multiple client devices. The technology described herein expands peripheral options to include peripherals associated with a user's other client devices that have a desktop application installed. For example, a user may access a virtual machine on a primary client, but use the touchscreen on a secondary client to control the virtual machine. The primary and secondary clients may have different connection types with the remote virtual machine. The connection types include a full connection and a background connection. In addition to different connection types, the remote desktop applications on the primary and secondary clients may operate in different modes. Two different modes include graphics mode and non-graphics mode.

## Description

### BACKGROUND

Users rely on computing environments with applications and services to accomplish computing tasks. Distributed computing systems and/or cloud computing platforms host and support different types of applications and services in managed computing environments. In particular, a cloud computing platform can implement a cloud access management system that provides access management functionality for different types of cloud computing offerings. For example, a cloud access management system can provide clients access to remote clients - including managed desktop services that include virtual machines assigned to individual users as virtual desktop devices configured with productivity, security, and collaboration tools. User input for the virtual desktop may be generated by a peripheral device (e.g., keyboard, mouse, touchscreen) connected to the client. The peripheral output is received by the client and communicated to the cloud-computing platform.

### SUMMARY

The technology described herein enables a remote desktop application to interact simultaneously with peripherals associated with multiple client devices, including, but not limited to PCs, phones, tablets, and virtual reality headset, and augmented reality glasses. Remote desktop software allows a user to access and control a computer or server from a remote location, described herein as a local client, or simply client. A primary client may be connected to one or more peripheral devices, such as a keyboard, a camera, a touchscreen, a printer, a touchpad, a mouse, and/or a game controller that may be used to control both the primary client and a virtual machine. These peripheral devices control the virtual machine through redirection provided by the client-side remote desktop application running on the primary client. Redirection refers to the process of sharing resources and peripherals between the client device (client-side) and the virtual machine (server-side). Conventionally, peripheral interaction during a remote desktop session is limited to peripherals communicatively coupled to the primary client.

The technology described herein expands peripheral options to include peripherals associated with a user's other client devices that have a remote desktop application installed. For example, a user may access a virtual machine on a primary client, but use the touchscreen on a secondary client to control the virtual machine. Both the primary client and the secondary client are running remote desktop software. The remote desktop software works with a remote agent on the virtual machine to identify peripherals available to the user across the user's devices and enables selection of those peripherals.

The technology described herein uses two or more client devices. For the sake of simplicity, the technology will be described in the context of a primary client and a secondary client. The primary and secondary clients may have different connection types with the remote virtual machine. In some examples, the connection types include a full connection and a background connection. The full connection is established after authentication and is enabled to handle graphical operations and data, such as the transmission of graphical-user-interface content from the virtual machine to the primary client. When a full connection is established, a background connection may also be established. The background connection may persist after the full connection ends. The full connection may end when the user ends an active session. The persistence of the background connection allows the technology described herein to determine whether peripheral devices associated with client devices that are not in an active session are present and available. The background connection is a lightweight connection that may also be described herein as a pre-connect connection or a non-final connection. In some examples, the primary device has a full connection with the virtual machine, while the secondary client may have a background connection, at least, initially. If a peripheral signal may be communicated over the lightweight background connection, then the background connection may be used. In contrast, if the peripheral signal may not be communicated over the lightweight background connection, for example because of bandwidth limitations, then a full connection with the secondary client device may be formed.

In addition to different connection types, the remote desktop applications on the primary and secondary clients may operate in different modes. In some examples, the modes include a graphics mode and a non-graphics mode. In graphics mode, the remote desktop is enabled to output graphics content provided by the virtual machine, such as a user interface. In non-graphics mode, graphical output is not processed. In non-graphics mode, various state communications may occur and peripheral data may be redirected to the virtual machine without a graphical interface being output. In some examples, the primary device runs in graphics mode, while the secondary device may run in non-graphics mode.

The virtual machine performs peripheral discovery and then gives the user the ability to use discovered peripherals. Initially, the virtual machine may use background connections to interrogate one or more secondary clients associated with the user's account. The interrogation can result in a list of peripherals associated with the one or more secondary client devices. This list of devices may be displayed to the user through a peripheral selection interface. The technology described herein presents a peripheral interface to the user through the primary client showing one or more peripherals associated with a secondary client. Upon selection of a peripheral through the peripheral interface, the user may begin controlling the virtual machine using the peripheral associated with the secondary client.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIG. 1 is a block diagram of an exemplary cloud access management system through which peripherals associated with multiple clients may control a virtual machine, in accordance with aspects of the technology described herein;
FIG. 2 provides a first exemplary method of providing connection management to enable peripheral sharing between clients, in accordance with aspects of the technology described herein;
FIG. 3 provides a secondary exemplary method of providing connection management to enable peripheral sharing between clients, in accordance with aspects of the technology described herein;
FIG. 4 provides a third exemplary method of providing connection management to enable peripheral sharing between clients, in accordance with aspects of the technology described herein;
FIG. 5 provides a block diagram of an exemplary cloud access management system suitable for use in implementing aspects of the technology described herein;
FIG. 6 provides a block diagram of an exemplary distributed computing environment suitable for use in implementing aspects of the technology described herein; and
FIG. 7 provides a block diagram of an exemplary computing environment suitable for use in implementing aspects of the technology described herein.

### DETAILED DESCRIPTION

### OVERVIEW

The technology described herein enables a remote desktop application to interact simultaneously with peripherals associated with multiple client devices, including, but not limited to PCs, phones, tablets, and virtual reality headset, and augmented reality glasses. Remote desktop software allows a user to access and control a computer or server from a remote location, described herein as a local client, or simply client. A primary client may be connected to one or more peripheral devices, such as a keyboard, a camera, a touchscreen, a printer, a touchpad, a mouse, and/or a game controller that may also be used to control the virtual machine. These peripheral devices control the virtual machine through redirection provided by a client-side remote desktop application running on the primary client. Redirection refers to the process of sharing resources and peripherals between the client device (client-side) and the virtual machine (server-side). This can include items such as a clipboard, webcam(s), USB device(s), printer(s), and more. Redirection enables users to access and use these resources within a remote session. For example, in a Remote Desktop Protocol (RDP) session, redirection allows the client device to share its peripherals with the virtual machine. Conventionally, peripheral interaction during a remote desktop session is limited to peripherals communicatively coupled to the primary client.

The technology described herein expands peripheral options to include peripherals associated with a user's other client devices. For example, a user may access a virtual machine on a primary client, but use the touchscreen on a secondary client to control the virtual machine. Both the primary client and the secondary client are running remote desktop software. The remote desktop software works with a remote agent on the virtual machine to identify peripherals available to the user across the user's devices and enables selection of those peripherals.

The technology described herein uses two or more client devices. For the sake of simplicity, the technology will be described in the context of a primary client and a secondary client. The primary and secondary clients may have different connection types with the remote virtual machine. In some examples, the connection types include a full connection and a background connection. The full connection is established after authentication and is enabled to handle graphical operations and data, such as the transmission of graphical-user-interface content from the virtual machine to the primary client. When a full connection is established, a background connection may also be established. The background connection may persist after the full connection ends. The full connection may end when the user ends an active session. The persistence of the background connection allows the technology described herein to determine whether peripheral devices associated with client devices that are not in an active session are present and available. The background connection is a lightweight connection that may also be described herein as a pre-connect connection or a non-final connection. In some examples, the primary device has a full connection with the virtual machine, while the secondary client may have a background connection, at least, initially. If a peripheral signal may be communicated over the lightweight background connection, then the background connection may be used. In contrast, if the peripheral signal may not be communicated over the lightweight background connection, for example because of bandwidth limitations, then a full connection with the secondary client device may be formed.

In addition to different connection types, the remote desktop applications on the primary and secondary clients may operate in different modes. In some examples, the modes include a graphics mode and a non-graphics mode. In graphics mode, the remote desktop is enabled to output graphics content provided by the virtual machine, such as a user interface. In non-graphics mode, graphical output is not processed. In non-graphics mode, various state communications may occur and peripheral data may be redirected to the virtual machine without a graphical interface being output. In some examples, the primary device runs in graphics mode, while the secondary device may run in non-graphics mode.

The virtual machine performs peripheral discovery and then gives the user the ability to use discovered peripherals. Initially, the virtual machine may use existing connections to interrogate one or more secondary clients associated with the user's account. The existing connections may be background connections or full connections. The interrogation can result in a list of peripherals associated with the one or more secondary client devices. This list of devices may be displayed to the user through a peripheral selection interface. The technology described herein presents a peripheral interface to the user through the primary client showing one or more peripherals associated with a secondary client. In one aspect, upon selection of a peripheral through the peripheral interface, the user may begin controlling the virtual machine using the peripheral associated with the secondary client. Once selected, the peripheral may be used to control the virtual machine until a terminal event occurs. Example terminal events include, but are not limited to, the deselection of the peripheral through the peripheral interface, the termination of the remote desktop session, and disconnection of the peripheral. In an aspect, selection of the peripheral through the peripheral interface is not required. Instead, a default user preference may be implemented to allow a peripheral to control the virtual machine or serve as a default peripheral output for the virtual machine. For example, a user default may specify that a printer communicatively coupled to a user's laptop serves as the default printer for the virtual machine, regardless of whether the laptop is the primary client device. In this example, the printer would not need to be selected, but may appear in a printer interface as the default printer.

In one aspect, the primary client establishes a full connection with the virtual machine and operates in graphics mode to enable the user of the primary device to participate in a remote desktop session. The virtual machine uses one or more background connections to the user's secondary clients to generate a list of peripheral devices available through the secondary clients. This list is output to the user through the primary device. Upon selection of a peripheral, the remote desktop application on the secondary application may transition to a peripheral support mode. The peripheral support mode may be a non-graphics mode that allows the remote desktop application to perform redirection of peripheral signals to the virtual machine. Accordingly, the user may interact with the peripheral device to generate peripheral signals sent to the secondary device and then from the secondary device to the virtual machine. The remote desktop application on the secondary device performs redirection and communicates the peripheral signal(s) to the virtual desktop. Simultaneously, the user may use one or more peripherals associated with the primary device to interact with the virtual machine. For example, the user may use a mouse connected to the primary device and a keyboard connected to the secondary device to interact with the virtual machine.

The virtual machine and various connection states with two or more clients may be managed by a cloud-access management system. A cloud-access management system provides access management functionality for different types of cloud computing offerings. The cloud-access management system can be a centralized platform designed to facilitate secure and efficient access to cloud-based resources from various devices acting as clients, including traditional desktops, laptops, and thin clients. The cloud-access management system can include software, hardware, and infrastructure components that enable users to authenticate, connect, and interact with remote resources hosted in the cloud. The cloud-access management system manages operations associated with user identities, permissions, and access policies to ensure that only authorized users can access specific resources. Additionally, it may incorporate features such as single sign-on (SSO), multi-factor authentication (MFA), and session management to enhance security and user experience.

Cloud access management supports access management operations for providing remote client sessions between local clients and remote clients to enable users to seamlessly access cloud-based resources. A connection management engine may operate based on a background connection, such as pre-connect connection that is an active lightweight connection at a client. The pre-connect connection may be used to determine what peripherals are available at a client. In aspects, the peripheral signal processing may occur over the pre-connect connection. In other aspects, the pre-connect connection may be used to quickly generate a full connection. For example, the pre-connect connection may not have adequate bandwidth for visual content, such as a video signal generated by a webcam. Connection management is provided using the connection management engine that is operationally integrated into the cloud-access management system. The cloud-access management system supports a connection management framework of computing components associated with configuration and employing pre-connect connections, un-finalized connections, and/or pre-existing remote client sessions.

A connection can refer to establishing a communication pathway, the communication pathway being between two or more of a client, a connection service, or a remote client. A remote client session can refer to a logical relationship - based on a connection - between a client and a remote client that persists over time and includes multiple interactions and transactions.

A remote desktop may be a purpose built client application that facilitates interaction with a virtual machine. A remote desktop application is a software tool that allows a user to connect to and control a computer, such as a virtual machine, from a remote location. This type of application enables users to access available resources, including files, applications, and network resources, as if they were physically present at the computer. These applications typically work by transmitting the screen display and input events (like keyboard and mouse actions) between the remote computer and the user's primary client device. Examples of remote desktop applications include Microsoft Remote Desktop, Windows App, TeamViewer, and AnyDesk. While the term desktop is often associated with a PC, the remote desktop application may operate on a phone, VR headset, tablet, and/or other devices.

### EXAMPLE SYSTEMS AND RESOURCES

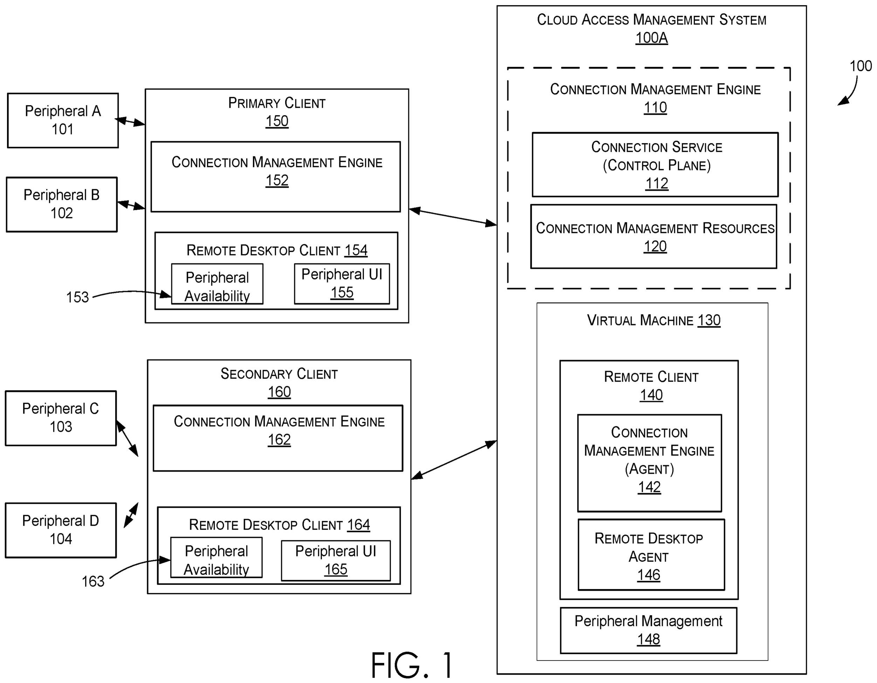

Aspects of the technical solution can be described by way of examples and with reference to FIG. 1. FIG. 1 illustrates a cloud computing environment (system) 100, cloud access management system 100A, connection management engine 110, connection service 112, connection management resources 120, virtual machine 130, remote client 140, connection management engine 142, remote desktop agent 146; primary client 150, peripheral A 101, peripheral B 102, connection management engine 152, peripheral availability client 153, remote desktop client 154, peripheral UI 155; secondary client 160, peripheral C 103, peripheral D 104, connection management engine 162, peripheral availability client 163, remote desktop client 164, and peripheral UI 165. While only one secondary client is illustrated, the presence of additional secondary clients is within the scope of the technology described herein.

The peripherals 101, 102, 103, and 104 can take various forms. Example peripherals include, but are not limited to, keyboards, mice, gamepads, microphones, webcams, barcode scanners, touchscreens, speakers, printers, 3-D printers, USB drives, external hard drives, and network interface cards. A computer peripheral is any device that connects to a computer to provide input, output, or both. These devices are not part of the core computer architecture, such as the CPU, motherboard, or power supply, but they enhance the computer's functionality by allowing users to interact with the system or access additional features. Peripherals can connect to a computer in various ways, including wired connections and wireless connections. Wired connections involve physical cables that connect the peripheral to the computer. Common wired connections include USB, HDMI, DisplayPort, and audio jacks. For example, a wired keyboard or mouse typically connects via a USB port. Wireless connections use wireless technologies such as Bluetooth, Wi-Fi, or RF (radio frequency) to connect peripherals to the computer without the need for physical cables. For instance, a wireless mouse or keyboard often uses Bluetooth to communicate with the computer.

Once connected, peripherals communicate with the computer through data transfer protocols. The computer's operating system and drivers manage this communication, ensuring that the peripheral functions correctly and integrates seamlessly with the system. For example, when a user presses a key on a keyboard, the keyboard sends a signal to the computer, which processes the input and performs the corresponding action.

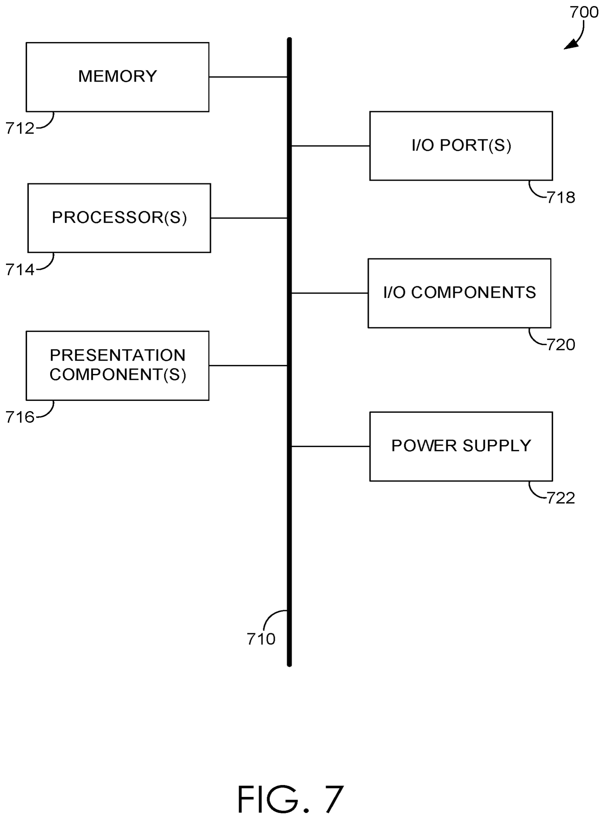

The primary client device 150 and the secondary client device 160 are user devices. User devices may comprise any type of computing device capable of use by a user. For example, in one aspect, user devices may be the type of computing device described in relation to FIG. 7 herein. By way of example and not limitation, a user device may be embodied as a personal computer (PC), a laptop computer, a mobile device, a smartphone, a tablet computer, a smart watch, a wearable computer, a fitness tracker, a virtual reality headset, augmented reality glasses, a personal digital assistant (PDA), a video player, a handheld communications device, a gaming device or system, an entertainment system, a vehicle computer system, an embedded system controller, a remote control, an appliance, a consumer electronic device, a workstation, or any combination of these delineated devices, or any other suitable device.

The remote desktop clients 154 and 164 are enabled to perform redirection of peripheral signals. The signal generated by the peripheral may be processed by the local client's operating system and/or a peripheral driver and communicated to the remote desktop client 154 or 164. Peripheral redirection in virtual machines and remote desktop environments allows various types of peripherals connected to the local device to be used seamlessly within a remote session. Different types of redirection may occur with different types of peripherals. Keyboard and mouse redirection allows the local keyboard and mouse to be used within the remote session. It ensures that all keystrokes and mouse movements are transmitted to the remote machine. Clipboard redirection enables users to copy and paste text, images, and files between the local device and the remote session. This is particularly useful for transferring data quickly and efficiently. Printer redirection allows users to print documents from the remote session to a printer connected to the local device. It simplifies the process of printing without needing to transfer files back to the local machine. USB redirection allows USB devices connected to the local device to be accessed and used within the remote session. This is useful for peripherals that require specific drivers or software to function properly. Audio and video redirection enables the use of local audio and video devices, such as microphones and webcams, within the remote session. It is essential for applications that require audio and video input, such as video conferencing.

The remote desktop client 154 includes a peripheral availability interface 153 and a peripheral UI component 155. The peripheral availability interface 153 provides information about peripherals associated with the primary client 150 to the peripheral management component 148. The peripheral information may include a description of the peripheral, including a name, address, model, etc. The peripheral information may be provided automatically upon joining a remote desktop session and then updated when peripherals are added or removed during the session. Alternatively, the peripheral information may be provided in response to a query (interrogation) from the virtual machine 130. The virtual machine 130 stores the peripheral information and makes it available to the peripheral UI 155. In this way, the peripheral UI 155 is able to display all available peripherals to the user across multiple client devices. Thus, in the example shown, the four peripheral devices (e.g., 101, 102, 103, and 104) or indications thereof would be shown in a user interface generated by the peripheral UI 155. The remote desktop client 164 also includes a peripheral availability interface 163 and a peripheral UI component 165 that are similar to the peripheral availability interface 153 and a peripheral UI component 155 described previously. The peripheral availability interface 163 and the peripheral UI component 165 may not be used when the secondary client 160 is in a secondary roll. However, different client devices may be become primary devices or secondary devices based on the user's preference. The peripheral availability interface 163 and a peripheral UI component 165 may be included in instances of the remote desktop client 164 for use when the secondary client 160 serves as the primary client.

When the user selects a peripheral from the peripheral selection interface, a peripheral activation message may be sent to the peripheral management component 148 if the peripheral selected is on a different client device, such as secondary client device 160. The peripheral management component 148 may then assess the state of the secondary client 160 to determine whether the state is suitable to enable use of the selected peripheral. Important state characteristics can include the state of the connection between the virtual machine 130 and the secondary client 160. The state of the remote desktop client 164 may also be considered. For example, if the remote desktop client 164 is in a sleep mode, it may be changed to an active mode. The active mode may not need to include a user interface. Finally, the device state of the secondary client 160 may be considered. For example, if the secondary client 160 is asleep or in another standby mode then the peripheral management component 148 may send a wake instruction. Similarly, the remote desktop client 164 state may be updated to a state suitable for processing the peripheral signal, such as by performing a redirection operation. In aspects, the redirection may be performed without putting the remote desktop client 164 into a graphic operation state. This means that the peripheral redirection steps may be performed without a user interface associated with the remote desktop client 164 being displayed.

The connection state of the secondary client 160 may also be evaluated for suitability. In aspects, the connection state may initially be in a background state, rather than a fully active state. Some peripheral signals may be transferred through the background state, such as keyboard and mouse inputs. Other peripheral signals, such as audio and video signals may require a full connection. The connection type suited for the selected peripheral type may be implemented by the peripheral management component 148. In aspects, the peripheral management component 148 may upgrade the connection type when needed. However, the peripheral management component 148 may choose not to downgrade the connection when a more capable connection than needed is already present. Downgrading the connection has the potential to interfere with other activities being performed on the secondary client 160. For simplicity, the peripheral management component 148 may defer to existing protocols used by the connection management engine 110 (or other component) to downgrade the connection. The connection management engine 110 (or other component) can include a protocol to not downgrade the connection when the peripheral management component 148 upgraded the connection and indicates that a peripheral control session is still active.

Once a peripheral, such as peripheral C103, is selected, then the user may use the peripheral C103 or any peripheral already connected to the primary client 150. In this example, the peripheral C103 may have been previously evaluated for potential use by the user. If an evaluation did not occur, then an availability evaluation may be performed. If the peripheral is determined to unavailable, then a message may be presented to the user indicating the peripheral is no longer available. The redirected peripheral signal is communicated from the remote desktop client 164 to the virtual machine 130 where the signal is processed by the remote desktop agent 146. The peripheral signal may result in a change to the user interface generated and displayed by the primary client 150 through the remote desktop client 154.

The cloud-access management system 100A provides a centralized platform designed to facilitate secure and efficient access to cloud-based resources (e.g., remote clients). The connection service 112 provides a control plane (e.g., a virtual desktop control plane) that operates as a centralized management and administration infrastructure service that is responsible for managing user sessions, virtual machines, networking, authentication, and other aspects of a virtual desktop environment. The cloud-access management system 100A can facilitate peripheral communications.

The connection management resources 120 can include operations, interfaces, and data components that support connection management functionality. Operations can include managing sessions, user authentication, resource provisioning, and monitoring. Interfaces are provided to users, administrators, and developers, facilitating access, configuration, and integration tasks. Data components include user profiles, session configurations, application images, virtual machine settings, and logging data, enabling efficient management, security, and compliance with the virtual desktop environment.

Virtual machine 130 is a representative virtual machine (VM) that is provisioned to serve as a session host for users accessing desktops and applications remotely. A VM can run an operating system (e.g., WINDOWS) and is configured with the necessary resources, such as CPU, memory, storage, and network connectivity, to support multiple concurrent user sessions. VMs are managed and maintained to ensure scalability, reliability, and performance for the desktop virtualization environment.

A client (e.g., primary client 150 or secondary client 160) connects to a remote client (e.g., remote client 140) to access cloud-based resources. The client 150, 160 can include a connection management engine (e.g., connection management engine 152, connection management engine 162) that enables connection management functionality on the client 150, 160. The client 150, 160 runs a remote desktop client (e.g., remote desktop client 154, remote desktop client 164) that enables users to access and control the remote client 140. In aspects, the primary client 150 receives a request to launch the remote client 140. The request can be associated with an indication from a user to open or activate a local client interface. As mentioned, different types of connections are possible between a client device and the virtual machine. Upon receiving a request to launch the remote client, the connection management engine 152, 162 may determine what type of connection exists (if any) and either forms a new connection or upgrades the connection to match the needed connection type. For example, the connection management engine 152, 162 at the client 150, 160 may determine whether the client 150, 160 is associated with a connected state, an express connection state, or a disconnected state. The express connection state can refer to any state that supports express connection in that the connection to the remote client 140 is expedited based on one or more connection management operations. Express connection states are useful for rapid activation of a peripheral on a secondary client. Instead of starting with no connection, the express connection allows a peripheral to be activiated quickly by quickly forming an appropriate connection.

The express connection state is identified from the following: a pre-connect connection state; or a cloned network context state. The pre-connect connected state is associated with a pre-connect connection of the client 150 and 160, the pre-connect connection is an active lightweight connection that enables an express connection between the client 150 and 160 and the remote client 140. The cloned network context state is associated with the client 150 of a user when a secondary client 160 of the user is connected to an existing remote client session. A cloned network context from a secondary client 160 enables an express connection between the client 150 and the remote client 140.

Establishing the remote client session can include communicating a request to complete a remote logon process and activating a client interface for the remote client 140. In this way, when the client 150 is associated with the connected state, the client interface for the remote client 140 is activated without needing to communicate a request to complete a remote logon process. And when the client 150, 160 is associated with a disconnected state, the client 150, 160 communicates a request for a new connection for establishing the remote client session; then communicates a request to complete a remote logon process; and then activates a client interface for the remote client 140. Moreover, establishing the remote client session is based on a remote logon process associated with a first set of operations that configure an un-finalized connection, and a secondary set of operations that configures a finalized connection using the un-finalized connection. The first set of operations are pre-graphics operations and the secondary set of operations are graphics operations. The secondary set of operation can further include peripheral operations.

It is contemplated that the remote client session can be used to connect a secondary client 160 associated with a user of the primary client 150, where the primary client 150 and the secondary client 160 are simultaneous active connections to the remote client session. In this way, peripherals from both clients may be used simultaneously. The primary client 150 and the secondary client 160 are simultaneously connected to the remote client session.

The connection service 112 enables hosting remote client sessions on session hosts (e.g., virtual machine 130) with secure endpoints for client-session host connections. The remote client 140 connects to a client 150, 160 via a remote connection associated with the remote client session. The connection service 112 and/or the remote client 140 support connection management. In particular, the remote client 140 includes the connection management engine 142 and remote desktop agent 146 associated with connection management operations. The connection management engine 142 determines a status associated with a remote client 140; based on determining the status, the connection management engine 142 executes one or more connection management operations. Based on executing the one or more connection management operations, the remote client 142 establishes a remote client session between a remote client 140 and a client 150, 160.

By way of context, a connection refers to a communication link between a client and a remote client. Being connected means that the client has established a communication link with the remote client. Being active means that a connected client is actively sending, receiving, or processing data with the remote client. An active client can be powered on and ready to execute commands. A client can be inactive, but still connected to an existing session. For example, a user of the client may establish a session with a remote client, but if there is no activity or interaction occurring within the session for a period of time, the client may go into an inactive state. A client that becomes inactive on an existing session can be reactivated on the session (e.g., via a request to reactivate the client that was inactive, but still connected). In this way, a connected state can describe two different types of connected states - a connected state with an active client or a connected state with an inactive client. In both situations, a remote client session exists, and if the client is an inactive client, the client can be reactivated on the remote client session that exists. For example, the client may be reactivated upon receiving an indication that a peripheral connected to the client is to be used. The active client may not have an activated remote client session window, which can be activated after determining a connection exists, and the client is active, but without the activated remote session window.

The connection management engine may further split a remote client session configuration sequence into a first set of operations (i.e., pre-graphics operations) and a secondary set of operations (i.e., graphics operations and peripheral operations). The remote client session configuration can be associated with authentication, authorization, connection configuration, session brokerage, connection establishment, and/or session initialization. For example, preparing a remote client for user interaction can include setting up user preferences, configuring the remote client's appearance, and launching a shell while executing its startup scripts. Additionally, the remote client session configuration handles user authentication and access rights to ensure a secure and personalized computing experience.

The pre-graphics operations include a subset of operations that can be performed before any graphical elements are rendered or displayed in a user interface. The graphics operations include a subset of operations involved in rendering and displaying graphical elements within a user interface. The peripheral operations are associated with activities or functions performed by peripheral devices. The peripheral operations facilitate initializing, configuring and executing input, output, storage, or communication functions facilitated by peripheral devices connected to a computer. In this way, the pre-graphics operations can be executed to configure an unfinalized connection, while the graphics operations and optionally peripheral operations are subsequently executed, for example, based on a user action to launch a client interface for the remote client or the selection of a peripheral associated with a secondary client. The un-finalized connections can be generated for multiple clients at the same time - each associated with a user. The connection management engine can provide for multiple active connections to the same remote client session.

The connection management engine further supports scenarios where a user is connected to a remote client session or remote client from multiple devices (e.g., a primary client and a secondary client). A pre-connect connection for a secondary client can be employed to instantly connect a user to the secondary client from the primary client - passing control from the primary client to the secondary client. The pre-connection connection may also be used to instantly allow use of a peripheral associated with the secondary device to be used as a control input or content output. The connection management engine can also support establishing multiple connections from different clients that are active and connected to the same remote client session. In the event that a remote client session - for a primary client - gets disconnected due to a machine restarting or a network glitch, the connection management engine can retrieve a network context from a secondary client to re-establish the remote client session for the primary client.

### EXAMPLE METHODS

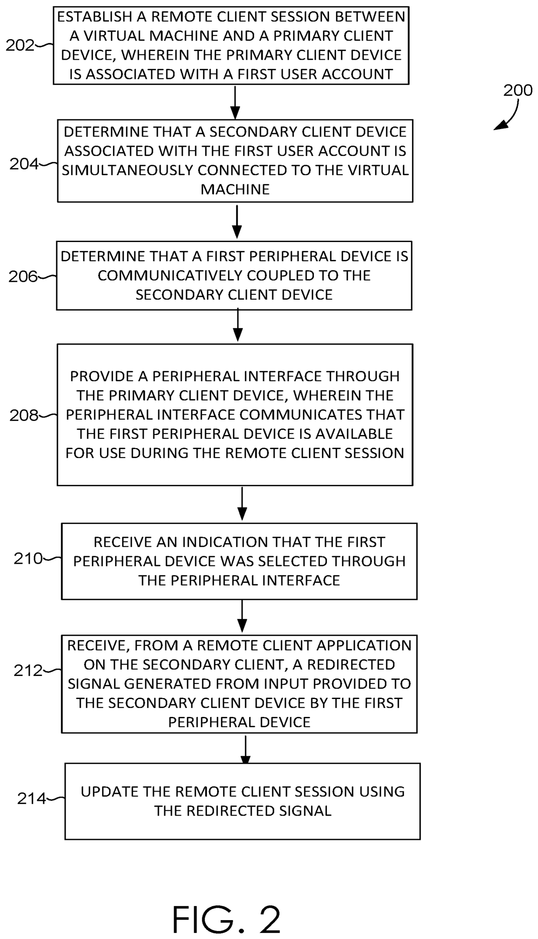

With reference to FIGS. 2, 3, and 4, flow diagrams are provided illustrating methods for providing peripheral access across multiple devices using a virtual machine. The methods may be performed using the cloud-access management system described herein. In embodiments, one or more computer-storage media having computer-executable or computer-useable instructions embodied thereon that, when executed, by one or more processors can cause the one or more processors to perform the methods (e.g., computer-implemented method) in the cloud-access management system (e.g., a computerized system).

Turning to FIG. 2, a flow diagram is provided that illustrates a method 200 for providing peripheral access across multiple devices. At step 202, the method 200 includes establishing a remote client session between a virtual machine and a primary client device. The primary client device is associated with a first user account. At step 204, the method 200 includes determining that a secondary client device associated with the first user account is simultaneously connected to the virtual machine. At step 206, the method 200 includes determining that a first peripheral device is communicatively coupled to the secondary client device. At step 208, the method 200 optionally includes providing a peripheral interface through the primary client device. The peripheral interface communicates that the first peripheral device is available for use. At step 210, the method 200 optionally includes receiving an indication that the first peripheral device was selected through the peripheral interface. The first peripheral may be selected for use during a specific remote session, such as an ongoing remote session. Alternatively, the first peripheral may be selected as a default peripheral for use with the virtual machine. For example, a user's printer may be selected as a default printer for use with the virtual machine. In the printer example, the printer may be connected to the secondary client device, rather than the primary client device. A connection between the virtual machine and the secondary device may be used to active the printer and print content provided by the virtual machine. At step 212, the method 200 includes receiving, from a remote client application on the secondary client, a redirected signal generated from input provided to the secondary client device by the first peripheral device. At step 214, the method 200 includes updating the remote client session using the redirected signal.

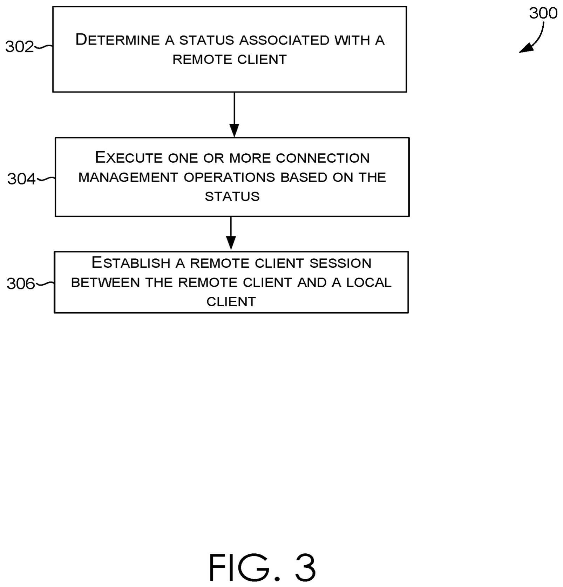

Turning to FIG. 3, a flow diagram is provided that illustrates a method 300 for providing peripheral access across multiple devices. At step 302, the method 300 includes initiating, at a primary client device, a remote client session between a virtual machine and the primary client device. A remote desktop application runs on the primary client device in a graphics mode and a first user account is associated with the remote desktop application.

At step 304, the method 300 optionally includes providing a peripheral interface through the primary client device. The peripheral interface communicates that a first peripheral associated with a secondary client device is available for use. At step 306, the method 300 optionally includes receiving an indication that the first peripheral was selected through the peripheral interface. The first peripheral may be selected for use during a specific remote session, such as an ongoing remote session. Alternatively, the first peripheral may be selected as a default peripheral for use with the virtual machine. For example, a user's printer may be selected as a default printer for use with the virtual machine. In the printer example, the printer may be connected to the secondary client device, rather than the primary client device. A connection between the virtual machine and the secondary device may be used to active the printer and print content provided by the virtual machine.

At step 308, the method 300 includes receiving, at the primary client device, a graphical content from virtual machine that was updated in response to a signal from the first peripheral. At step 310, the method 300 includes outputting, at the primary client device, the graphical content.

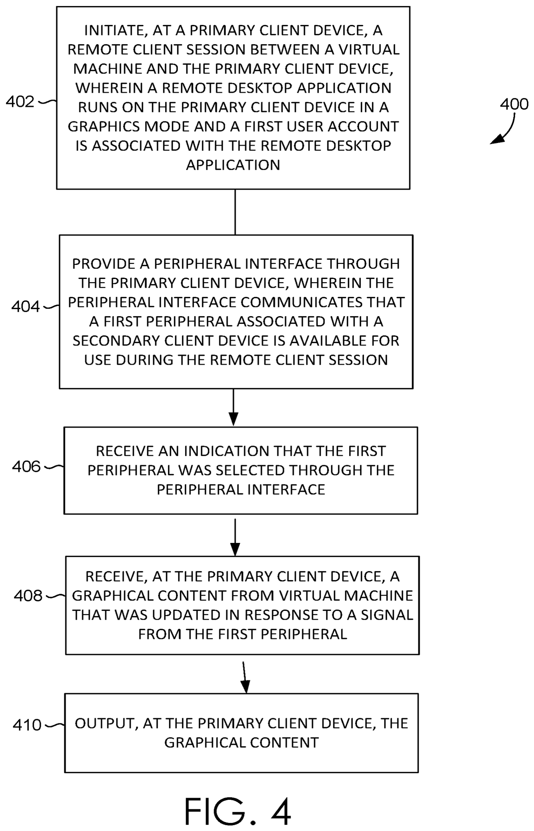

Turning to FIG. 4, a flow diagram is provided that illustrates a method 400 providing peripheral access across multiple devices. At step 402, the method 400 includes receiving, at a remote desktop application running on a secondary client device, an inquiry from a virtual machine regarding available peripheral devices associated with the secondary client device. The inquiry is received over a first connection. At step 404, the method 400 includes providing a response to the inquiry indicating that a first peripheral device is available. At step 406, the method 400 includes receiving an instruction to redirect signals from the first peripheral device to the virtual machine.

At step 408, the method 400 includes receiving a signal from the first peripheral device. At step 410, the method 400 includes generating a redirected peripheral signal from the signal. At step 412, the method 400 includes communicating the redirected peripheral signal over a second connection to the virtual machine.

### TECHNICAL IMPROVEMENT

Embodiments of the present techniques have been described with reference to several inventive features (e.g., operations, systems, engines, and components) associated with a cloud access management system. Inventive features described include: operations, interfaces, data structures, and arrangements of computing resources associated with providing the functionality described herein relative with reference to a connection management engine. Functionality of the embodiments of the present invention have further been described, by way of an implementation and anecdotal examples - to demonstrate that the operations for providing the connection management engine as a solution to a specific problem in device management technology to improve computing operations in cloud access management systems.

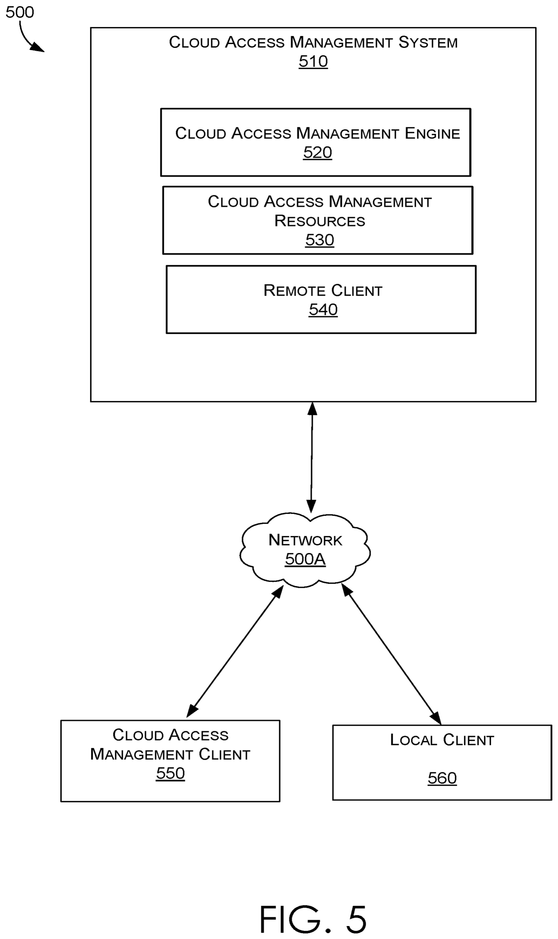

Aspects of the technical solution have been described by way of examples and with reference to FIG. 1. FIG. 1 is a block diagram of an exemplary technical solution environment, based on example environments described with reference to FIGS. 5, 6 and 7 for use in implementing embodiments of the technical solution are shown. Generally, the technical solution environment includes a technical solution system suitable for providing the example cloud computing system 100 in which methods of the present disclosure may be employed. In particular, FIG 1 illustrates a high level architecture of the cloud computing system 100 in accordance with implementations of the present disclosure, among other engines, managers, generators, selectors, or components not shown (collectively referred to herein as "components").

### ADDITIONAL SUPPORT FOR DETAILED DESCRIPTION

### EXAMPLE CLOUD ACCESS MANAGEMENT SYSTEM IN A COMPUTING ENVIRONMENT

Referring now to FIG. 5, FIG. 5 illustrates a computing environment in which implementations of the present disclosure may be employed. In particular, FIG. 5 shows a high level architecture of an example cloud computing platform 500 and cloud access management system 510 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing environment 100 provides computing system resources for different types of managed computing environments. For example, the cloud computing platform supports delivery of computing services - including compute, servers, storage, databases, networking, and intelligence. The components of cloud computing environment 500 may communicate with each other over a network 500A which may include, without limitation, one or more local area networks (LANs) and/or wide area networks (WANs).

The cloud-access management system 510 provides cloud access management functionality for different types of cloud computing offerings. The cloud-access management system can be a centralized platform designed to facilitate secure and efficient access to cloud-based resources from various devices, including traditional desktops, laptops, and thin clients. The cloud-access management system can include software, hardware, and infrastructure components that enable users to authenticate, connect, and interact with remote resources hosted in the cloud. The cloud-access management system manages operations associated with user identities, permissions, and access policies to ensure that only authorized users can access specific resources. Additionally, it may incorporate features such as single sign-on (SSO), multi-factor authentication (MFA), and session management to enhance security and user experience.

Cloud access management system 510 enables secure and efficient access for clients to remote resources, such as remote clients, through a centralized platform. It encompasses authentication mechanisms to verify the identities of users and devices seeking access, including multi-factor authentication for enhanced security. Authorization protocols govern user permissions and access levels, dictating which resources or applications each user can utilize. Session management functionalities handle the establishment, monitoring, and termination of user sessions, optimizing performance while ensuring compliance with security policies. The cloud-access management system also manages connections between clients and remote clients, employing robust encryption and data integrity measures to protect sensitive information during transmission.

The cloud-access management system 510 includes a cloud access management engine 520 that is a computing environment that supports executing computational tasks associated with The cloud-access management system 510. The cloud-access management engine 520 can be a hardware or software component that performs computational operations, such as, mathematical calculations, data processing, and algorithm execution. The cloud-access management system 510 integrates cloud access management resources 530 into cloud access management system 510 to effectively provide cloud access management in a computing environment.

The cloud-access management resources 530 refer to computing elements (e.g., components, capability, or entities) that collectively enable The cloud-access management engine 520 operations. The cloud-access management resources 530 encompass a spectrum of computing elements, beginning with the diverse operations The cloud-access management resources 530 can perform, ranging from complex computations to data manipulations. Interfaces, an integral part of The cloud-access management resources 530, provide the means for both user interaction and seamless integration with external systems, ensuring a dynamic and interactive computing experience. The data facet of The cloud-access management resources 530 involves various types: input data, which is the information provided for processing; processing data, representing the data manipulated during computational tasks; and output data, the results generated by The cloud-access management engine 520. In this way, The cloud-access management resources 530 support the broader cloud access management engine 520 and cloud access management system 510.

The cloud-access management resources can include connection management resources that encompass the core operations, interfaces, and data components within cloud access management system 110, collectively supporting its functionality in overseeing diverse devices across the cloud computing system 100. Operations within the connection management engine 110 include connection establishment, authentication, session management, error handling, logging, and monitoring, ensuring seamless user experiences and optimal resource utilization. Interfaces, including graphical user interfaces, command-line interfaces, web-based portals, APIs, and integration points, facilitate initiating and managing connections while enabling programmatic interaction and integration with other systems. Data components consist of connection profiles, session data, access control lists, performance metrics, and security keys are meticulously managed to ensure data integrity, confidentiality, and availability. The connection management resources 120 facilitate seamless, secure, and efficient communication between clients and remote clients, enabling users to access cloud resources with reliability and ease.

The cloud-access management system 510 provisions remote clients (e.g., remote client 540). A remote client 540 can be virtual desktop environment (e.g., Desktop as a Service - DaaS). The remote client 540 leverages virtualization, cloud computing, and network technologies to deliver scalable, secure, and cost-effective virtual desktop environments to users, enabling flexible remote access to computing resources from any location, on any device. DaaS providers provide Virtualized Desktop Infrastructures (VDI) that host virtual desktops on servers in their data centers. These virtual desktops are created using virtualization technologies such as hypervisors or containerization platforms. Each virtual desktop includes an operating system, applications, data, and user settings.

The client 550 connects to the remote client 540. The client 550 can be a software application or device installed or used on the end-user's local hardware, such as a desktop computer, laptop, thin client, or mobile device. This client software facilitates the remote connection to the VDI hosted by the remote client provider, allowing end-users to access their virtual desktop environments over the internet. Client 550 can be a managed client that is centrally controlled and monitored by cloud access management system 510. Managed clients typically have device management software installed or configured on them, allowing administrators to enforce security policies, configure settings, deploy applications, and perform remote management tasks. The client 550 can be an unmanaged client that operates independently without being centrally controlled or monitored. These devices lack device management software or configurations, and users have full control over their settings and applications.

The cloud-access management client 560 supports access to cloud access management system 510. Cloud access management client 560 provides a graphical or command-line interface for users or administrators to monitor and manage user sessions to ensure proper termination, timeout, and session activity logging. Configuring authentication methods such as passwords, multi-factor authentication (MFA), biometrics, or single sign-on (SSO) to verify user identities, and setting up authorization rules and permissions to govern user access to specific resources, applications, or data. The cloud-access management client 560 supports centralized access management within a computing environment empowering efficient access administration.

### EXAMPLE DISTRIBUTED COMPUTING SYSTEM ENVIRONMENT

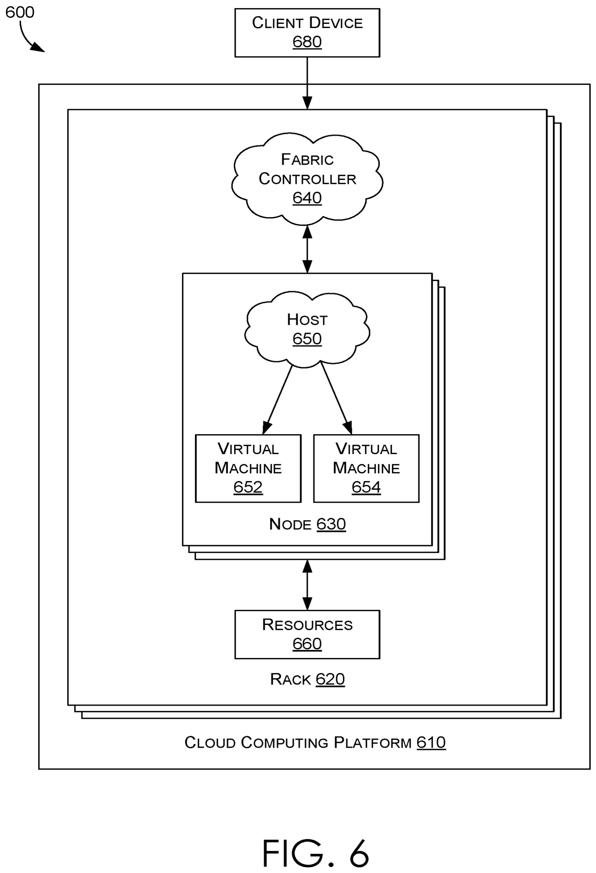

Referring now to FIG. 6, FIG. 6 illustrates an example distributed computing environment 600 in which implementations of the present disclosure may be employed. In particular, FIG. 6 shows a high level architecture of an example cloud computing platform 610 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 600 that includes cloud computing platform 610, rack 620, and node 630 (e.g., computing devices, processing units, or blades) in rack 620. The technical solution environment can be implemented with cloud computing platform 610 that runs cloud services across different data centers and geographic regions. Cloud computing platform 610 can implement fabric controller 640 component for provisioning and managing resource allocation, deployment, upgrade, and management of cloud services. Typically, cloud computing platform 610 acts to store data or run service applications in a distributed manner. Cloud computing infrastructure 610 in a data center can be configured to host and support operation of endpoints of a particular service application. Cloud computing infrastructure 610 may be a public cloud, a private cloud, or a dedicated cloud.

Node 630 can be provisioned with host 650 (e.g., operating system or runtime environment) running a defined software stack on node 630. Node 630 can also be configured to perform specialized functionality (e.g., compute nodes or storage nodes) within cloud computing platform 610. Node 630 is allocated to run one or more portions of a service application of a tenant. A tenant can refer to a customer utilizing resources of cloud computing platform 610. Service application components of cloud computing platform 610 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 630, nodes 630 may be partitioned into virtual machines (e.g., virtual machine 652 and virtual machine 654). Physical machines can also concurrently run separate service applications. The virtual machines or physical machines can be configured as individualized computing environments that are supported by resources 660 (e.g., hardware resources and software resources) in cloud computing platform 610. It is contemplated that resources can be configured for specific service applications. Further, each service application may be divided into functional portions such that each functional portion is able to run on a separate virtual machine. In cloud computing platform 610, multiple servers may be used to run service applications and perform data storage operations in a cluster. In particular, the servers may perform data operations independently but exposed as a single device referred to as a cluster. Each server in the cluster can be implemented as a node.

Client device 680 may be linked to a service application in cloud computing platform 610. Client device 680 may be any type of computing device, which may correspond to computing device 600 described with reference to FIG. 6, for example, client device 680 can be configured to issue commands to cloud computing platform 610. In embodiments, client device 680 may communicate with service applications through a virtual Internet Protocol (IP) and load balancer or other means that direct communication requests to designated endpoints in cloud computing platform 610. The components of cloud computing platform 610 may communicate with each other over a network (not shown), which may include, without limitation, one or more local area networks (LANs) and/or wide area networks (WANs).

### EXAMPLE COMPUTING ENVIRONMENT

Having briefly described an overview of embodiments of the present technical solution, an example operating environment in which embodiments of the present technical solution may be implemented is described below in order to provide a general context for various aspects of the present technical solution. Referring initially to FIG. 7 in particular, an example operating environment for implementing embodiments of the present technical solution is shown and designated generally as computing device 700. Computing device 700 is but one example of a suitable computing environment and is not intended to suggest any limitation as to the scope of use or functionality of the technical solution. Neither should computing device 700 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output ports 718, input/output components 720, and illustrative power supply 722. Bus 710 represents what may be one or more buses (such as an address bus, data bus, or combination thereof). The various blocks of FIG. 7 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 7 is merely illustrative of an example computing device that can be used in connection with one or more embodiments of the present technical solution. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory may be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc.

Another example provides a computerized system. The computerized system comprises: one or more computer processors; and computer memory storing computer-useable instructions that, when used by the one or more computer processors, cause the one or more computer processors to perform operations, the operations comprising: establishing a remote client session between a virtual machine and a primary client device, wherein the primary client device is associated with a first user account; determining that a secondary client device associated with the first user account is simultaneously connected to the virtual machine; determining that a first peripheral device is communicatively coupled to the secondary client device; receiving, from a remote client application on the secondary client, a redirected signal generated from input provided to the secondary client device by the first peripheral device; and updating the remote client session using the redirected signal.

Additionally or alternatively, in some such examples the operations further comprise sending an inquiry to the secondary client device over a background connection between the secondary client device and the virtual machine, wherein the inquiry seeks information about the first peripheral device. Additionally or alternatively, in some such examples the remote client session between the virtual machine and the primary client device is carried by a full connection suitable for carrying graphics content. Additionally or alternatively, in some such examples the operations further comprise, upon receiving the selection, transitioning the secondary client device from a background connection to a full connection. Additionally or alternatively, in some such examples the redirected signal is received over the full connection. Additionally or alternatively, in some such examples the background connection is an active lightweight connection that is not suitable for carrying graphics content. Additionally or alternatively, in some such examples the operations further comprises, providing a peripheral interface through the primary client device, wherein the peripheral interface communicates that the first peripheral device is available for use during the remote client session; and receiving an indication that the first peripheral device was selected through the peripheral interface. Additionally or alternatively, in some such examples establishing the remote client session comprises: communicating a request to complete a remote logon process; and activating a client interface for the virtual machine.

Another example provides one or more computer-storage media having computer-executable instructions embodied thereon that, when executed by a computing system having a processor and memory, cause the processor to perform operations, the operations comprising: initiating, at a primary client device, a remote client session between a virtual machine and the primary client device, wherein a remote desktop application runs on the primary client device in a graphics mode and a first user account is associated with the remote desktop application; providing a peripheral interface through the primary client device, wherein the peripheral interface communicates that a first peripheral associated with a secondary client device is available for use during the remote client session; receiving an indication that the first peripheral was selected through the peripheral interface; receiving, at the primary client device, a graphical content from virtual machine that was updated in response to a signal from the first peripheral; and outputting, at the primary client device, the graphical content.

Additionally or alternatively, in some such examples an instance of the remote desktop application runs on the secondary client device. Additionally or alternatively, in some such examples the instance runs in a non-graphics mode. Additionally or alternatively, in some such examples a connection to the secondary client device used to determine the first peripheral is available is a background connection. Additionally or alternatively, in some such examples a connection to the secondary client device used to communicate the signal from the first peripheral is a background connection. Additionally or alternatively, in some such examples a connection to the secondary client device used to communicate the signal from the first peripheral is a full connection.

Another example provides a computer-implemented method, the method comprising: receiving, at a remote desktop application running on a secondary client device, an inquiry from a virtual machine regarding available peripheral devices associated with the secondary client device, wherein the inquiry is received over a first connection; providing a response to the inquiry indicating that a first peripheral device is available; receiving an instruction to redirect signals from the first peripheral device to the virtual machine; receiving a signal from the first peripheral device; generating a redirected peripheral signal from the signal; and communicating the redirected peripheral signal over a second connection to the virtual machine.

Additionally or alternatively, in some such examples the remote desktop application runs in a non-graphics mode. Additionally or alternatively, in some such examples the first connection to the secondary client device is a background connection. Additionally or alternatively, in some such examples the second connection to the secondary client device is a full connection. Additionally or alternatively, in some such examples the second connection to the secondary client device is a background connection. Additionally or alternatively, in some such examples a primary client device and the secondary client device are simultaneously connected to the virtual machine.

The technology described herein enables a remote desktop application to interact simultaneously with peripherals associated with multiple client devices. The technology described herein expands peripheral options to include peripherals associated with a user's other client devices that have a desktop application installed. For example, a user may access a virtual machine on a primary client, but use the touchscreen on a secondary client to control the virtual machine. The primary and secondary clients may have different connection types with the remote virtual machine. The connection types include a full connection and a background connection. In addition to different connection types, the remote desktop applications on the primary and secondary clients may operate in different modes. Two different modes include graphics mode and non-graphics mode.

### ADDITIONAL STRUCTURAL AND FUNCTIONAL FEATURES OF EMBODIMENTS OF THE TECHNICAL SOLUTION

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
establishing a remote client session between a virtual machine and a primary client device, wherein the primary client device is associated with a first user account;
determining that a secondary client device associated with the first user account is simultaneously connected to the virtual machine;
determining that a first peripheral device is communicatively coupled to the secondary client device;
receiving, from a remote client application on the secondary client, a redirected signal generated from input provided to the secondary client device by the first peripheral device; and
updating the remote client session using the redirected signal.

2. The system of claim 1, wherein the operations further comprise sending an inquiry to the secondary client device over a background connection between the secondary client device and the virtual machine, wherein the inquiry seeks information about the first peripheral device.

3. The system of claim 1, wherein the remote client session between the virtual machine and the primary client device is carried by a full connection suitable for carrying graphics content.

4. The system of claim 1, the operations further comprising, upon receiving the selection, transitioning the secondary client device from a background connection to a full connection, and
optionally, wherein the redirected signal is received over the full connection or wherein the background connection is an active lightweight connection that is not suitable for carrying graphics content.

5. The system of claim 1, the operations further comprising, providing a peripheral interface through the primary client device, wherein the peripheral interface communicates that the first peripheral device is available for use during the remote client session; and
receiving an indication that the first peripheral device was selected through the peripheral interface.

6. The system of claim 1, wherein establishing the remote client session comprises:
communicating a request to complete a remote logon process; and
activating a client interface for the virtual machine.

7. One or more computer-storage media having computer-executable instructions embodied thereon that, when executed by a computing system having a processor and memory, cause the processor to perform operations, the operations comprising:
initiating, at a primary client device, a remote client session between a virtual machine and the primary client device, wherein a remote desktop application runs on the primary client device in a graphics mode and a first user account is associated with the remote desktop application;
providing a peripheral interface through the primary client device, wherein the peripheral interface communicates that a first peripheral associated with a secondary client device is available for use during the remote client session;
receiving an indication that the first peripheral was selected through the peripheral interface;
receiving, at the primary client device, a graphical content from virtual machine that was updated in response to a signal from the first peripheral; and
outputting, at the primary client device, the graphical content.

8. The media of claim 7, wherein an instance of the remote desktop application runs on the secondary client device.

9. The media of claim 8, wherein the instance runs in a non-graphics mode.

10. The media of claim 8, wherein a connection to the secondary client device used to determine the first peripheral is available is a background connection or wherein a connection to the secondary client device used to communicate the signal from the first peripheral is a background connection or wherein a connection to the secondary client device used to communicate the signal from the first peripheral is a full connection.

11. A computer-implemented method, the method comprising:
receiving, at a remote desktop application running on a secondary client device, an inquiry from a virtual machine regarding available peripheral devices associated with the secondary client device, wherein the inquiry is received over a first connection;
providing a response to the inquiry indicating that a first peripheral device is available;
receiving an instruction to redirect signals from the first peripheral device to the virtual machine;
receiving a signal from the first peripheral device;
generating a redirected peripheral signal from the signal; and
communicating the redirected peripheral signal over a second connection to the virtual machine.

12. The method of claim 11, wherein the remote desktop application runs in a non-graphics mode.

13. The method of claim 12, wherein the first connection to the secondary client device is a background connection.

14. The method of claim 12, wherein the second connection to the secondary client device is a full connection or wherein the second connection to the secondary client device is a background connection.

15. The method of claim 12, wherein a primary client device and the secondary client device are simultaneously connected to the virtual machine.
